# EUROPÄISCHE PATENTSCHRIFT

(11) **EP 0 620 769 B1**
(45) Veröffentlichungstag und Bekanntmachung des Hinweises auf die Patenterteilung: **06.09.1995**
(21) Anmeldenummer: 93900085.7
(22) Anmeldetag: 17.12.1992
(51) Int. Cl.: B21C 47/00

(54) **VORRICHTUNG ZUM SPALTEN VON METALLBAND**
DEVICE FOR SLITTING STRIP METAL
DISPOSITIF POUR REFENDRE DES FEUILLARDS METALLIQUES

(30) Priorität: 09.01.1992 DE 4200351
(43) Veröffentlichungstag der Anmeldung: 26.10.1994
(73) Patentinhaber: HOHFELD, Egon, D-56271 Iserlohn (DE)
(72) Erfinder: HOHFELD, Egon, D-56271 Iserlohn (DE)
(74) Vertreter: Patentanwälte Dipl.-Ing. Conrad Köchling Dipl.-Ing. Conrad-Joachim Köchling
(86) Internationale Anmeldenummer: DE9201071
(87) Internationale Veröffentlichungsnummer: WO9313886

(56) Entgegenhaltungen:
- FR-A- 682 895
- US-A- 2 343 720
- PATENT ABSTRACTS OF JAPAN vol. 8, no. 90 (M-292)(1527) 25. April 1984 & JP-A-59 7424 (KAWASAKI SEITETSU K.K.) 14 Januar 1984
- PATENT ABSTRACTS OF JAPAN vol. 13, no. 334 (M-855)(3682) 27. Juli 1989 & JP-A-11 13 121 (KAWASAKI STEEL CORP)

## Beschreibung

Die Erfindung betrifft eine Vorrichtung zum Spalten von Metallband, bestehend aus einer Ablaufhaspel, auf der ein Coil eines Metallbandes gehalten ist, eine Kreismesserschere, mittels derer das vom Coil ablaufende Metallband ein- oder mehrfach gespalten wird, sowie einer Aufwickelhaspelvorrichtung für das gespaltene Metallband, wobei die Aufwickelhaspelvorrichtung je eine Aufwickelhaspel für die in Trennrichtung nebeneinander befindlichen geradzahligen und ungeradzahligen Bandteile aufweist, beide Aufwickelhaspeln motorisch angetrieben und die Zugfördermittel für das vom Coil abgezogene Bandmaterial sind.

Eine derartige Vorrichtung ist beispielsweise aus der FR-A- 682 895 bekannt. Bei der bekannten Vorrichtung ändert sich aber beim Ablauf des Bandes von der Ablaufhaspel und beim Aufwickeln der Bandstreifen auf die Aufwickelhaspeln ständig der Durchmesser des Coils bzw. der aufgewickelten Bandstreifen, so daß sich ständig unterschiedliche Winkel je nach Aufwickelgrad bzw. Abwickelgrad des Bandes bzw. der Bandabschnitte einstellen.

Im Stand der Technik ist ferner eine Vorrichtung ähnlicher Art bekannt, wobei zwischen der Ablaufhaspel und der Kreismesserschere Umlenkrollen angeordnet sind, bevor dann das gespaltene Metallband über Umlenkrollen auf die Aufwickelhaspel geführt wird. Bei dieser Anordnung ergeben sich erhebliche Längendifferenzen der einzelnen Schnitte, die möglicherweise aus der vielfachen Umlenkung des gespaltenen Metallbandes um Umlenkrollen resultiert. Im Stand der Technik übernimmt die Kreismesserschere den Zug des Bandes, wobei die Ablaufhaspel einen gewissen Rückzug aufbaut. Zusätzlich ist vor der Aufwickelhaspel noch häufig eine Bandpresse vorgesehen.

Die im Stand der Technik bekannten Vorrichtungen sind insofern nachteilig, als sie einen außerordentlich hohen Raumbedarf besitzen und zudem die Problematik der auftretenden Längendifferenzen der einzelnen Schnitte nicht beherrschbar ist.

Ausgehend von diesem Stand der Technik liegt der Erfindung die Aufgabe zugrunde, eine Vorrichtung gattungsgemäßer Art zu schaffen, die bei äußerst geringem Raumbedarf den Spaltvorgang und Aufwickelvorgang leicht beherrschbar macht.

Zur Lösung dieser Aufgabe schlägt die Erfindung vor, daß die motorisch angetriebene Ablaufhaspel und die Kreismesserschere mit gleicher, vorzugsweise konstanter, Ablauf- bzw. Umlaufgeschwindigkeit umlaufen, wobei die Aufwickelhaspeln demgegenüber voreilend angetrieben sind, daß die Ablaufhaspel und die Aufwickelhaspeln höhenverstellbar am Vorrichtungsgestell gehaltert sind, wobei das von der Ablaufhaspel ablaufende Band dem Einlaufspalt der Kreismesserschere geradlinig vorzugsweise horizontal zuführbar ist und die in Richtung auf das untere der beiden lotrecht übereinander angeordneten Messerrollen der Kreismesserschere gespaltene Band (z.B. ungeradzahlige Bandabschnitte) der nächstliegenden Aufwickelhaspel unter einem von der Waagerechten, gebildet durch ablaufendes Band und Einzugspalt der Kreismesserschere, geringfügig nach unten abweichenden Winkel und die in Richtung auf das obere der beiden lotrecht übereinander angeordneten Messerrollen der Kreismesserschere gespaltene Band (z.B. geradzahlige Bandabschnitte) der in Abzugsrichtung des Bandes folgenden Aufwickelhaspel unter einem von der Waagerechten nach oben gering abweichenden Winkel zugeführt ist, wobei ferner motorische, pneumatische oder hydraulische Stellantriebe für die Haspeln (2,5,6) vorgesehen sind, mittels derer dieser Bandverlauf mindestens etwa konstant einstellbar ist.

Bei der erfindungsgemäßen Vorrichtung läuft die Ablaufhaspel und die Kreismesserschere mit konstanter Ablaufgeschwindigkeit um. Diese Geschwindigkeit kann geregelt werden.

Es sind hierzu entsprechende Antriebsmotoren vorgesehen, die über entsprechende Regelorgane in ihrer Geschwindigkeit eingestellt und aufeinander abgestimmt werden können. Die Aufwickelhaspeln ziehen das gespaltene Band unter Voreilung gegenüber der Ablaufhaspel und der Kreismesserschere von der Ablaufhaspel ab, wodurch beim Aufwickeln durch die auf die Bandabschnitte einwirkenden Zugkräfte eine gewisse Reckwirkung erreicht wird, so daß das Band beim Aufwickeln quasi ausgereckt wird.

Durch die erfindungsgemäße Ausbildung ist nicht nur der erforderliche Raumbedarf auf ein Minimum beschränkt, sondern es wird auch ein äußerst präzises und beherrschbares Ab- und Aufwickeln des gespaltenen Bandes ermöglicht. Die kompakte Bauform ergibt sich insbesondere deshalb, weil auf die Anordnung von Schlingengruben sowie Umlenkrollen vollständig verzichtet werden kann. Ebenfalls kann auf eine Bandpresse verzichtet werden.

Längendifferenzen der einzelnen abgespaltenen Bandteile ergeben sich nicht oder nur in unbedeutendem Maße, offenbar deshalb, weil auf die Vielfachanordnung von Umlenkrollen und dergleichen verzichtet wird. Offenbar kommt hierbei auch dem Merkmal der unterschiedlichen Aufwicklung der durch die Kreismesserschere abgespaltenen Bandteile erhebliche Bedeutung zu.

Durch die Kreismesserschere werden im Bereich einer Trennstelle jeweils die benachbarten Randkanten der Schnittlinie einerseits nach unten und andererseits nach oben relativ zur vorzugsweise waagerecht ausgerichteten Bandoberfläche gedrängt. Diese Schnittrichtung wird beim Aufwickeln auf die Aufwickelhaspel berücksichtigt, wobei die Tangente des von der Ablaufhaspel ablaufenden Bandes waagerecht verläuft und in den Einlaufspalt der Kreismesserschere gerichtet ist, dann aber nachfolgend bis zur Aufwickelhaspel nicht exakt diese Fluchtrichtung beibehalten wird, sondern die Tangente der nach relativ unten weggedrängten gespaltenen Bandabschnitte um einen geringen Winkelgrad von der gedachten Verlängerung der waagerechten Ebene nach unten abgewinkelt verläuft, während die anderen, nach relativ oben abgespaltenen Bandabschnitte in einem geringen Winkelgrad nach oberhalb der gedachten Horizontalebene gerichtet verlaufen. Die Aufwickelhaspel und die Ablaufhaspel wird jeweils entsprechend dem Bandablauf bzw. dem Bandaufwickelgrad quer zur waagerechten Ebene verstellt, so daß unabhängig vom Aufwickelgrad ständig der gleiche Ablauf bzw. Aufwickelwinkel eingestellt ist.
Die Ablaufhaspel und die Aufwickelhaspeln können dabei an lotrecht am Maschinengestell gehalterten Führungsstangen verstellt werden, wobei zum Zwecke der Verstellung beispielsweise Elektromotoren oder dergleichen benutzt werden können.

Selbstverständlich ist auch die Ablaufgeschwindigkeit der Ablaufhaspel und die Drehzahl der Kreismesserschere einstellbar, wobei beide so eingestellt sind, daß ein konstanter Bandablauf sichergestellt ist. Lediglich die Aufwickelhaspeln werden mit einer geringfügigen Voreilung betrieben, damit das Band unter Aufbringung von Zugkraft auf die Aufwickelhaspeln aufgewickelt werden kann. Die Drehzahl der Aufwickelhaspel ist entsprechend einstellbar und regelbar.

Eine bevorzugte Weiterbildung wird darin gesehen, daß die Winkelabweichung des gespaltenen Bandes von der Waagerechten ca. 1,5 ° beträgt.

Desweiteren ist bevorzugt vorgesehen, daß der Mittenabstand von Ablaufhaspel zu Kreismesserschere ca. 900 bis 1100 mm, der Mittenabstand von Kreismesserschere zu der ersten Aufwickelhaspel ca. 900 bis 1100 mm und zur zweiten Aufwickelhaspel ca. 2400 bis 2600 mm beträgt.

Ein Ausführungsbeispiel der Erfindung ist in der Zeichnung dargestellt und im folgenden näher beschrieben.

Es zeigt:
- Fig. 1: eine erfindungsgemäße Vorrichtung in Seitenansicht;
- Fig. 2: desgleichen in Draufsicht.

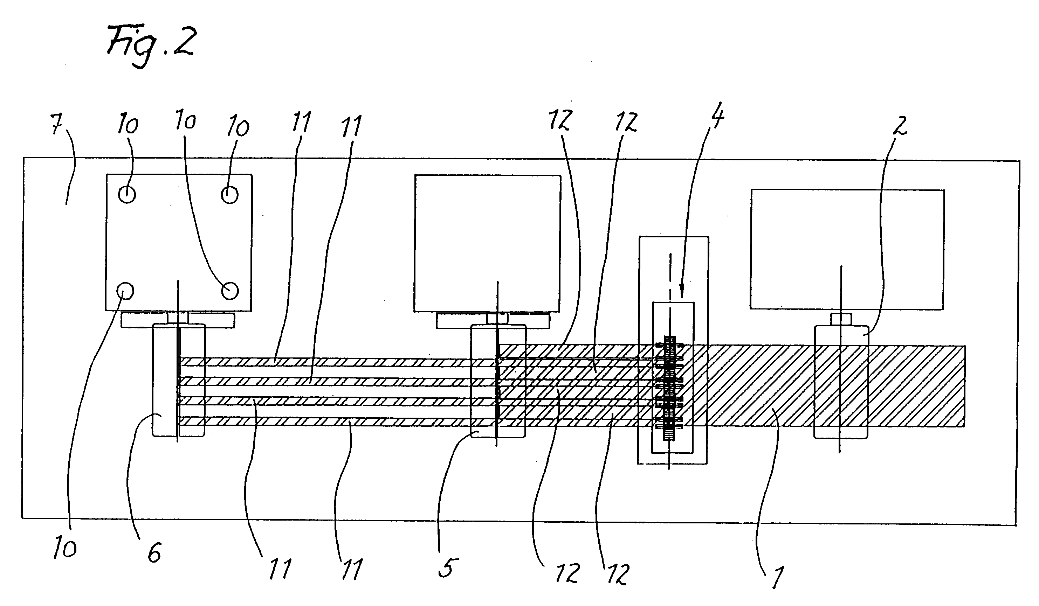

Die Vorrichtung zum Spalten von Metallband 1 besteht aus einer Ablaufhaspel 2, auf der ein Coil 3 eines Metallbandes 1 gehalten ist. Ferner besteht die Vorrichtung aus einer Kreismesserschere 4, mittels derer das vom Coil 3 ablaufende Metallband 1 mehrfach gespalten wird, wie insbesondere aus Figur 2 ersichtlich ist. Im Ausführungsbeispiel wird das Metallband 1 in acht Teilstücke aufgespalten. Schließlich besteht die Vorrichtung noch aus einer Aufwickelhaspelvorrichtung für das gespaltene Metallband 11, 12. Die Aufwickelhaspelvorrichtung weist je eine Aufwickelhaspel 5, 6 für die in Trennrichtung nebeneinander befindlichen geradzahligen und ungeradzahligen Bandteile 11 bzw. 12. Beide Aufwickelhaspeln 5, 6 sind motorisch angetrieben und stellen Zugfördermittel für das vom Coil abgezogene Bandmaterial 1 dar. Tatsächlich werden diese Haspeln 5,6 mit Voreilung betrieben, so daß das Band von der Ablaufhaspel 2 durch die Kreismesserschere 4 gezogen wird. Auch die Ablaufhaspel 2 und die Kreismesserschere 4 ist motorisch angetrieben, wobei diese Aggregate mit gleicher, vorzugsweise konstanter Ablauf- bzw. Umlaufgeschwindigkeit umlaufend ausgebildet sind. Sowohl die Ablaufhaspel 2 als auch die Aufwickelhaspeln 5, 6 sind höhenverstellbar am Vorrichtungsgestell 7 gehaltert.

Das von der Ablaufhaspel 2 ablaufende Band 1 wird dem Einlaufspalt der Kreismesserschere geradlinig, insbesondere horizontal zugeführt, wobei die in Richtung auf das untere der beiden lotrecht übereinander angeordneten Messerrollen 8, 9 der Kreismesserschere 4 gespaltene Band zum Beispiel der ungeradzahligen Bandabschnitte 12 der nächstliegenden Aufwickelhaspel 5 unter einem von der Waagerechten (gebildet durch das ablaufende Band 1 und den Einzugspalt der Kreismesserschere 4) geringfügig gleichgerichtet nach unten abweichenden Winkel zugeführt werden. Die in Richtung auf das obere der beiden lotrecht übereinander angeordneten Messerrollen 8,9 der Kreismesserschere 4 gespaltene Band 11 (geradzahlige Bandabschnitte) werden der in Abzugsrichtung des Bandes 1 folgenden Aufwickelhaspel 6 unter einem von der Waagerechten gering nach oben abweichenden Winkel zugeführt. Ferner sind in der Zeichnung im einzelnen nicht dargestellte Stellantriebe für die Höhenverstellung der Haspeln 5, 6 und 2 vorgesehen, mittels derer dieser gewünschte Bandverlauf etwa konstant einstellbar ist. Der Ablauf ist in der Zeichnung in durchgezogenen Linienzügen für den Fall dargestellt, daß das Coil 3 noch fast vollständig auf der Ablaufhaspel 2 sich befindet und nur die ersten Wicklungen auf den Aufwickelhaspeln 5, 6 angeordnet sind. In gestrichelten Linienzügen ist der Fall gezeigt, daß die Ablaufhaspel 2 nahezu vollständig entleert und die Aufwickelhaspeln 5, 6 fast vollständig gefüllt sind.

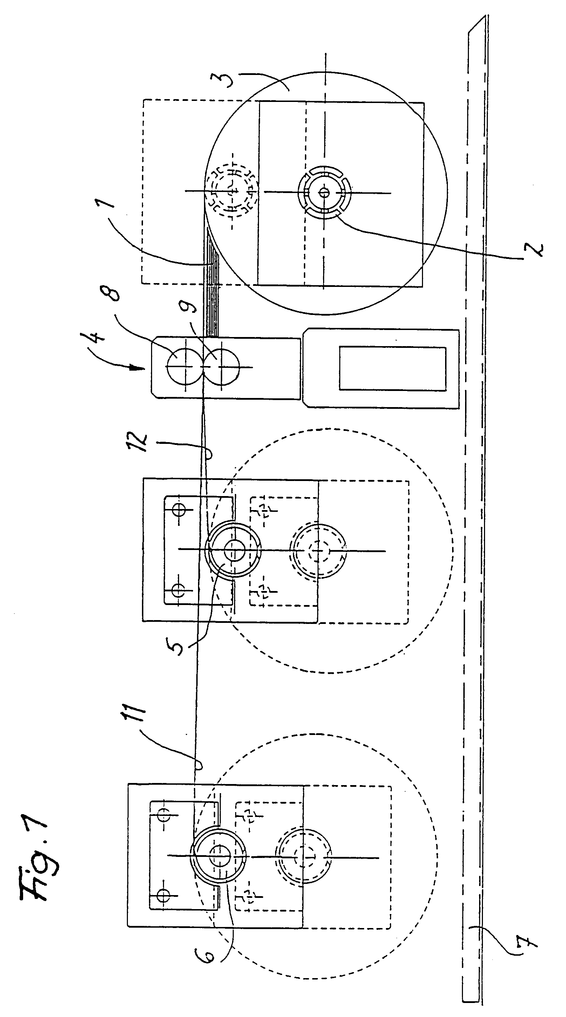

Die Winkelabweichung des gespaltenen Bandes 11 bzw. 12 von der Waagerechten (Verlauf des Bandes 1 im Bereich zwischen der Ablaufstelle vom Coil 3 und dem Spalte der Kreismesserschere 4) beträgt etwa 1,5 ° nach relativ unten bzw. oben in der Zeichnungsfigur 1 gesehen. Aufgrund der gewählten Ausbildung ist es möglich, die gesamte Vorrichtung auf einer Baulänge von ca. 5 m unterzubringen. Der Coildurchmesser des Coils 3 kann dabei etwa 660 mm betragen. Der Mittelabstand der Ablaufhaspel 2 zu der Kreismesserschere 4 beträgt etwa 900 bis 1100 mm, im Ausführungsbeispiel 927 mm. Der Mittenabstand von der Kreismesserschere 4 zu der ersten Aufwickelhaspel 5 beträgt im Ausführungsbeispiel 938 mm, während der Mittenabstand von der Kreismesserschere 4 zu der zweiten Aufwickelhaspel 6 etwa 266 mm beträgt. Bei 10 sind schematisch Stangenführungen angezeigt, die ebenso an den Gehäuseteilen der anderen Haspelvorrichtungen angebracht werden können. Mittels dieser Stangenführungen ist eine exakte Verschiebung der Haspeln 2, 5, 6 in vertikaler Richtung bezogen auf Figur 1 möglich. Die Gesamtlänge der Vorrichtung liegt damit unter 5 m, wobei die Gesamthöhe der Vorrichtung etwa bei 1,80 m liegt.

## Patentansprüche

1. Vorrichtung zum Spalten von Metallband (1), bestehend aus einer Ablaufhaspel (2), auf der ein Coil (3) eines Metallbandes (1) gehalten ist, einer Kreismesserschere (4), mittels derer das vom Coil (3) ablaufende Metallband (1) ein- oder mehrfach gespalten wird, sowie einer Aufwickelhaspelvorrichtung (5,6) für das gespaltene Metallband (11,12), wobei die Aufwickelhaspelvorrichtung je eine Aufwickelhaspel (5,6) für die in Trennrichtung nebeneinander befindlichen geradzahligen und ungeradzahligen Bandteile (11,12) aufweist, beide Aufwickelhaspeln (5,6) motorisch angetrieben und die Zugfördermittel für das vom Coil (3) abgezogene Bandmaterial (1) sind,
**dadurch gekennzeichnet,** daß die motorisch angetriebene Ablaufhaspel (2) und die Kreismesserschere (4) mit gleicher, vorzugsweise konstanter, Ablauf- bzw. Umlaufgeschwindigkeit umlaufen, wobei die Aufwickelhaspeln (5,6) demgegenüber voreilend angetrieben sind,
daß die Ablaufhaspel (2) und die Aufwickelhaspeln (5,6) höhenverstellbar am Vorrichtungsgestell (7) gehaltert sind, wobei das von der Ablaufhaspel (2) ablaufende Band (1) dem Einlaufspalt der Kreismesserschere (4) geradlinig vorzugsweise horizontal zuführbar ist und die in Richtung auf das untere der beiden lotrecht übereinander angeordneten Messerrollen (8,9) der Kreismesserschere (4) gespaltene Band (12) (zum Beispiel ungeradzahlige Bandabschnitte) der nächstliegenden Aufwickelhaspel (5) unter einem von der Waagerechten, gebildet durch ablaufendes Band (1) und Einzugspalt der Kreismesserschere (4), geringfügig nach unten abweichenden Winkel und die in Richtung auf das obere der beiden lotrecht übereinander angeordneten Messerrollen (8,9) der Kreismesserschere (4) gespaltene Band (11) (zum Beispiel geradzahlige Bandabschnitte) der in Abzugsrichtung des Bandes (1) folgenden Aufwickelhaspel (6) unter einem von der Waagerechten nach oben gering abweichenden Winkel zugeführt ist, wobei ferner motorische, pneumatische oder hydraulische Stellantriebe für die Haspeln (2,5,6) vorgesehen sind, mittels derer dieser Bandverlauf mindestens etwa konstant einstellbar ist.

2. Vorrichtung nach Anspruch 1, **dadurch gekennzeichnet,** daß die Winkelabweichung des gespaltenen Bandes (11, 12) von der Waagerechten ca. 1,5 ° beträgt.

3. Vorrichtung nach Anspruch 1 oder 2, **dadurch gekennzeichnet,** daß der Mittenabstand von Ablaufhaspel (2) zur Kreismesserschere (4) ca. 900 bis 1100 mm, der Mittenabstand von Kreismesserschere (4) zu der ersten Aufwickelhaspel (5) ca. 900 bis 1100 mm und zur zweiten Aufwickelhaspel (6) ca. 2400 bis 2600 mm beträgt.

## Claims

1. A device for slitting strip metal (1), consisting of an uncoiler (2), on which a coil (3) of a strip metal (1) is held, circular shears (4), by means of which the strip metal (1) running off from the coil (3) is slit once or several times, and also a coiling device (5, 6) for the slit strip metal (11, 12), whereby the coiling device comprises a coiling reel (5, 6) for each of the even-numbered and odd-numbered strip parts (11, 12) situated next to one another in the separating direction, both coiling reels (5, 6) are driven by motor and are the pulling means for the strip metal (1) drawn from the coil (3),
**characterised in that** the motor-driven uncoiler (2) and the circular shears (4) rotate at the same, preferably constant run-off and rotational speed, but with the coiling reels (5, 6) being driven at a faster speed, **in that** the uncoiler (2) and the coiling reels (5, 6) are mounted in a height-adjustable manner on the stand of the device (7), whereby it is possible to supply the strip (1) running from the uncoiler (2) in a straight line and preferably horizontally to the inlet nip of the circular shears (4) and the strip (12) (e.g. odd-numbered strip sections) slit in the direction of the lower of the two cutting rollers (8, 9) of the circular shears (4) disposed vertically above one another is supplied to the nearer coiling reel (5) at an angle diverging slightly in the downward direction from the horizontal, formed by the uncoiling strip (1) and the inlet nip of the circular shears (4), and the strip (11) (e.g even-numbered strip sections) slit in the direction of the upper of the two cutting rollers (8, 9) of the circular shears (4) disposed vertically above one another is supplied to the coiling reel (6) following in the uncoiling direction of the strip (1) at an angle diverging slightly from the horizontal in the upward direction, whereby further motorised, pneumatic or hydraulic actuating drives for the reels (2, 5, 6) are provided, by means of which this strip course can be set at least roughly constant.

2. A device according to Claim 1,
**characterised in that** the angular divergence of the slit strip (11, 12) from the horizontal is roughly 1.5°.

3. A device according to Claim 1 or 2,
**characterised in that** the centre distance of uncoiler (2) to the circular shears (4) is roughly 900 to 1100 mm, the centre distance from circular shears (4) to the first coiling reel (5) is roughly 900 to 1100 mm and to the second coiling reel (6) is roughly 2400 to 2600 mm.

## Revendications

1. Dispositif pour refendre une bande en métal (1), constitué par une débobineuse (2) sur laquelle est maintenue une bobine (3) de bande en métal (1), et par une cisaille à lames circulaires (4) au moyen desquelles la bande en métal (1) qui se déroule de la bobine (3) est refendue une ou plusieurs fois, ainsi que par un dispositif à bobineuses (5, 6) qui est destiné à la bande en métal refendue (11, 12), cependant que le dispositif à bobineuses comprend à chaque fois une bobineuse (5, 6) pour les parties de bande (11, 12) paires et impaires qui sont juxtaposées dans la direction ou elles sont refendues, que les deux bobineuses (5, 6) sont entraînées par un moteur et qu'elles constituent les moyens de déplacement par traction du matériau en bande (1) qui est retiré de la bobine (3),
caractérisé par le fait que la débobineuse (2) qui est entraînée par un moteur et la cisaille à lames circulaires (4) tournent à la même vitesse de sortie ou de rotation, respectivement, celle-ci étant de préférence constante, cependant que les bobineuses (5, 6) sont entraînées en avance par rapport à elles,
et par le fait que la débobineuse (2) et les bobineuses (5, 6) sont maintenues sur le bâti (7) du dispositif en pouvant être réglées en hauteur, cependant que la bande (1) qui se déroule de la débobineuse (2) peut être amenée à la fente d'entrée de la cisaille à lames circulaires (4) en ligne droite et de préférence horizontalement, que la bande (12) qui est refendue dans la direction du cylindre inférieur de la paire de cylindres à lames superposés à la verticale (8, 9) de la cisaille à lames circulaires (4) (par exemple les parties de bande impaires) est amenée à la bobineuse suivante (5) sous un angle qui s'écarte légèrement vers le bas de l'horizontale formée par la bande en déroulement (1) et par la fente d'entrée de la cisaille à lames circulaires (4), et que la bande (11) qui est refendue dans la direction du cylindre supérieur de la paire de cylindres à lames superposés à la verticale (8, 9) de la cisaille à lames circulaires (4) (par exemple les parties de bande paires) est amenée à la bobineuse suivante (6) dans la direction de déroulement de la bande (1) sous un angle qui s'écarte légèrement de l'horizontale vers le haut, et cependant qu'il est prévu en outre des entraînements de réglage à moteur, pneumatiques ou hydrauliques qui sont destinés à la débobineuse et aux bobineuses (2, 5, 6) et au moyen desquels ce déroulement de la bande peut être réglé de façon à être constant, du moins à peu près.

2. Dispositif selon la revendication 1, caractérisé par le fait que l'écart angulaire de la bande refendue (11, 12) par rapport à l'horizontale est égal à 1,5° environ.

3. Dispositif selon la revendication 1 ou 2, caractérisé par le fait que la distance moyenne entre la débobineuse (2) et la cisaille à lames circulaires (4) est de 900 à 1.100 mm environ, et que la distance moyenne de la cisaille à lames circulaires (4) est de 900 à 1.100 mm environ par rapport à la première bobineuse (5) et de 2.400 à 2.600 mm par rapport à la deuxième bobineuse (6).
